# EUROPEAN PATENT APPLICATION

(11) **EP 3 193 319 A1**
(43) Date of publication of application: **19.07.2017**
(21) Application number: 16151005.2
(22) Date of filing: 13.01.2016
(51) Int. Cl.: G08G 1/01, G01S 13/93, G06K 9/00, G08G 1/017, G08G 1/04, G08G 1/052, G08G 1/08, G08G 1/082, G08G 1/087, G08G 1/095, G08G 1/0967

(54) **SMART RECORDING, CONTROL AND WARNING SYSTEM FOR CROSSROAD TRAFFIC**

(71) Applicant: Ekin, Akif, 34450 Istanbul (TR)
(72) Inventor: Ekin, Akif, 34450 Istanbul (TR)
(74) Representative: Karaahmet, Erdogan

(57) **Abstract**

The invention subject to the application is related to a smart recording, control and warning system which determines the traffic lights, speed of vehicles and traffic violations and records them, provides green wave function in the shortest time possible, at the direction of the vehicles which have right of way, and which can operate not only for a single crossroad but in coordination with other crossroads nearby which enables to control the relationship of traffic in each crossroad and to submit the necessary warnings to the related posts.

## Description

### Technical Field of the Invention

The invention subject to the application is related to a smart recording, control and warning system for crossroad traffic which can operate not only for a single crossroad but in coordination with other crossroads nearby which enables to control the relationship of traffic in each crossroad and to submit the necessary warnings to the related posts/points.

### Known State of the Art (Prior Art)

The invention subject to the application consists of a smart recording, control and warning system for crossroad traffic which can operate not only for a single crossroad but in coordination with other crossroads nearby which enables to control the relationship of traffic in each crossroad and to submit the necessary warnings to the related posts/points.

Nowadays the density of traffic has increased together with the increasing number of population and vehicles. The increase in traffic density leads to various problems such as accidents, CO₂ release which leads to air pollution usually arising from the unnecessary waiting in heavy traffic, traffic violations, for vehicles which have right of way such as ambulances, fire engines, police cars etc to be stuck in traffic and for them to be late for an emergency, unsuitable divining in traffic etc. Several studies have been conducted and are being conducted in order to overcome the above mentioned problems.

A system which enables the timing and operation mode of the traffic lights in the most suitable way and senses traffic density by means of sensors is described in the Turkish patent document in known state of the art, numbered TR 2010/01169. The system subject to this invention, places the vehicles at the crossroads and the pedestrians that have pressed the button in an order and records said information to the memory, thereby the light is turned green for the vehicles and pedestrians in said order. Moreover when there are no vehicles present the free lanes are determined and the light is not turned green for these those lanes. The system detects the emergency vehicles and their arrival direction and turns the traffic lights into flashing mode or the lights at the lane in which the emergency vehicle is arriving is turned green.

Additionally the Turkish patent application of the known state of the art numbered TR 2007/00853 describes a traffic information system which enables several functions to be carried out by integrating the smart camera system network with the two way traffic information system violation determination/recording and traffic information systems. A micro computer apparatus, manages information collection and distribution and diagnostic systems by digitalizing an image, recognition, bridging between networks and collecting information via radio communication. The smart camera functions as a communication node which bridges the wide area computer network with two different local radio communications.

Another document of the known state of the art numbered EP1656426 B1 describes a system which examines the locations and speed of vehicles such as GPS based ambulances, a fire engine etc and adjusts the traffic lights at the crossroads accordingly. This system enables traffic flow by ensuring that the crossroad lights, at which the vehicles that are being tracked by GPS such as ambulances or fire engines are arriving in an emergency situation, are turned green and the lights at the other crossroads are turned red.

A smart traffic light comprising infrared sensors, camera and laser is described in the patent of the known state of the art numbered CN 104599516 A, wherein said traffic light senses the distances of the vehicles at crossroads and changes the light signalization according to traffic density. It is quite important for desired changes to be able to be carried out on the obtained smart traffic light; at any time needed, and as a result in the Chinese patent application of the known state of the art numbered CN 202996032 U describes a smart traffic light having a multi screen panel that has been developed in order to ensure that the above conditions are met. Said traffic light comprises a led screen and enables the installation of several cards.

A traffic control system which turns the pedestrian signal lights into red and gives an alarm in case of an accident and turns the light green or red for vehicles depending on the situation is described in the Korean Patent document of the known state of the art numbered KR1338124 B1. Control unit for Traffic lights controls both the signal lights for vehicles and the signal lights for pedestrians and also enables for an alarm to be given. The communication unit provides communication using wireless communication techniques.
A violation determination and recording system which is a processing system, for traffic violations such as accidents, red light violations and speed violations is described in the American Patent application numbered US 2006/0269104 A1 which has been developed in order to be used to regulate traffic. Moreover sourced location data images, in order to provide time, date and location and violation time are recorded.

In addition to the systems of the applications mentioned above, systems which provide solutions to different problems using different technologies are also available.

In these applications sensors installed into the traffic lights, radio/GPS antenna devices, sensors obtained using radar technology which takes Doppler effect as basis, or central traffic information systems are used in order to sense the vehicles that have right of way such as ambulances, or fire engines, and it is enabled for these vehicles to move without waiting in heavy traffic, the lights are turned to green when said vehicles arrive at the crossroads, and the lights for the vehicles coming from the opposite direction is turned to red, or the traffic lights are managed according to vehicle speed, or the usage of lanes having restricted red light violation and vehicles following other vehicles at a close distance are determined.

However the applications and systems mentioned above have several disadvantages and said systems comprise at least one of the following disadvantages:
- They can only read licence plates and determine red light violation at crossroads,
- They can only read license plates and determine speed limit violations
- As each installation location for each system is not in the same place, additional infrastructure and excavation works and separate installation needs to be carried out for each system,
- Said systems do not communicate with each other and are independent from one another; therefore any of the above mentioned problems cannot be submitted to the driver or the vehicle.

In other words; the solutions relating to violations of the speed limit, license plate reading, determining illegal vehicles, enabling the traffic lights to switch to green in order to ensure that the vehicles which have right of way are not affected from traffic density, changing of traffic lights according to traffic density in crossroads, determining accidents, average speed information, submitting information to the related vehicle if said vehicle has been configured with suitable hardware and enabling communication with other crossroads in the systems which have been described in detail above are obtained using technologies that are different and separate from each other.

Besides this, a smart recording, control and warning system for crossroad traffic relating to eliminating all of these problems is provided by means of the invention subject to the application. The invention subject to the application does not necessitate any additional installations in comparison to other systems. The system is at the same location as the traffic lamps and if necessary it can replace the traffic lights or can be installed anywhere where traffic lights are present. The travel directions of the vehicles and pedestrians are evaluated by means of the invention and the estimation of possible accident risks is provided and in case of an accident the driver or vehicle using said mobile device applications are warned. The information obtained by means of the continuous recording system according to the present invention, is collected at a single database centre and is monitored and controlled.

### Brief Description of the Invention and its Aims

The invention subject to the application is related to a smart recording, control and warning system for crossroad traffic which can operate not only for a single crossroad but in coordination with other crossroads nearby which enables to control the relationship of traffic in each crossroad and to submit the necessary warnings to the related posts/points.

The smart recording, control and warning system for crossroad traffic basically comprises a top section accommodating mechanical and electronic sub components and smart traffic light formed a body section. The following can be performed by means of the smart recording, control and warning system for traffic formed by mechanical and electronic sub components;
- Violation of light, speed and traffic rules are determined and recorded with license plates being automatically recognized.
- The speed and travel direction information at the crossroads are recorded and evaluated, and warning signals are submitted depending on such information via mobile devices or similar systems, to the drivers or directly to the vehicles if said vehicles are configured technically with the required hardware.
- The number of vehicles at the cross roads, the speed and travel direction of each vehicle is recorded and evaluated, and the required speed information for a green wave is submitted via mobile devices or similar systems to the drivers and directly to the vehicle if said vehicle is technically configured with the necessary hardware. Statistical information such as the speed, acceleration, average speed and density of pedestrians and vehicles on the roads and at crossroads according to time and location, is recorded and controlled at a single central database.
- All of the previous records are examined by enabling the usage of said records in city planning and drivers that have higher risk in being involved in an accident are determined beforehand and those who have violated traffic rules, or have been involved in crime or accidents can also be determined.
- Information such as the location, travel direction, speed, and license plate information of vehicles within traffic flow can be recorded continuously and in real time.
- It is enabled for crossroad traffic lights to operate in compliance with automatic traffic density.
- Green light characteristics can be provided at the shortest possible time for emergency vehicles that have right of way such as ambulances police cars according to their travel direction.
- All evaluation results that are desired to be submitted such as violation of the speed limit, possible accidents and speed information required for green light are shared by means of warning or signals with the people inside the vehicle or with the drivers via mobile applications.
- Information exchange between crossroads is provided by determining the traffic density in crossroads and following the evaluation of traffic flow, waiting time at the traffic lights are minimized and traffic flow is accelerated.
- By means of continuous and automatic licence plate reading, average speed determinations between at least two points and vehicle routes can be used for traffic planning.

### Description of the Figures Illustrating the Invention

The figures that have been prepared in order to further describe the smart recording, control and warning system for crossroad traffic developed according to the invention, which can operate not only for a single crossroad but in coordination with other crossroads nearby which enables to control the relationship of traffic in each crossroad and to submit the necessary warnings to the related posts/points have been described below.
Figure 1- Lateral section view of the smart traffic light
Figure 2- General view of the smart traffic light

### Definitions of the aspects/ sections/ parts forming the Invention

The parts/sections/aspects that are shown in the figures which have been prepared in order to further describe the smart recording, control and warning system for crossroad traffic that has been developed by the present invention have each been numbered and the reference of each number has been given below.
**1.** Top section
**2.** Body section
**3.** Red Traffic Light
**4.** Yellow Traffic Light
**5.** Green Traffic Light
**6.** Radar
**7.** Licence Plate Recognition Camera
**8.** Cooling Unit
**9.** Panoramic View Camera
**10.** Server
**11.** Distributor
**12.** Modem
**13.** Card Reader
**14.** Switch
**15.** Smart Power Supply

### Detailed Description of the Invention

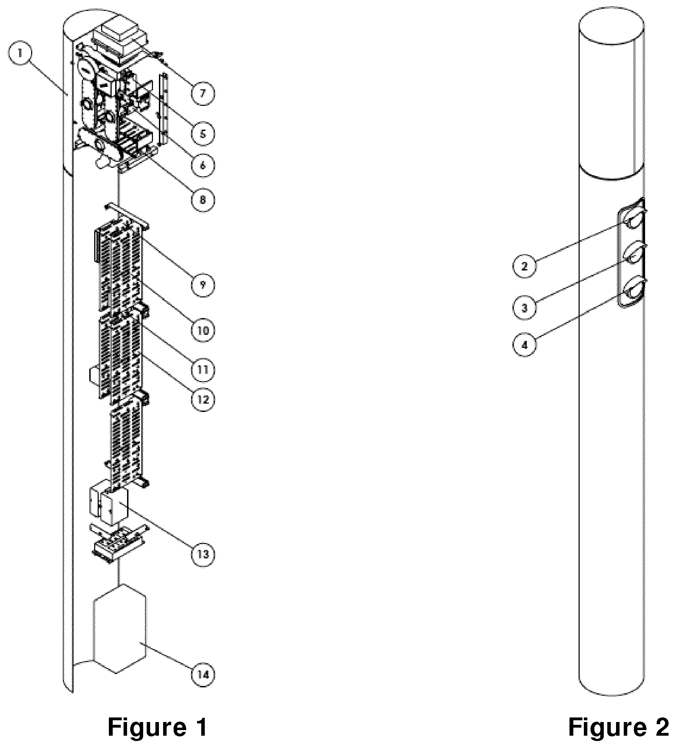

A smart recording, control and warning system for crossroad traffic which operates not only for a single crossroad but in coordination with other crossroads nearby which enables to control the relationship of traffic in each crossroad and to submit the necessary warnings to the related posts/points, basically has a top section (1) and a body section (2) comprising mechanic and electronic subcomponents. The lateral section view of the smart traffic light which is an illustrative embodiment of the invention is shown in Figure 1.
The smart recording, control and warning system for crossroad traffic subject to the invention comprises;
- A radar or lidar (6) positioned in the top section (1) in order to generally determine the speed and type of vehicles on the road and in addition to this, the speed of the pedestrians,
- At least one licence plate recognition camera (7) positioned in the top section (1) which enables to continuously read plates automatically in order to record said information and to submit it to a central database via the system;
- A panoramic camera (9) which enables to capture the general road image in order to submit it to a central database if desired to ensure that the information obtained is recorded and controlled;
- At least one modem or a switch (12) enabling communication in order to carry out the exchange, distribution and sharing of information between the central database and this system,
- At least one server (10) which provides the storage, and publication of the information and access to said information obtained on a network by means of a modem or a switch (12) and to distribute the information on said network to different users or systems.

The smart traffic light which is another application of the smart recording, control and warning system for crossroad traffic subject to the invention consists of;
• A radar or a lidar (6) positioned in the top section (1) in order to generally determine the speed of vehicles on the road and in addition to this, the speed of the pedestrians,
• At least one licence plate recognition cameras (7) positioned in the top section (1) which enables to continuously read plates automatically in order to record said information and to submit it to a central database via the system;
• A cooling unit (8) mounted into the top section (1) operating with 24V power which controls the temperature of the entire system and prevents overheating;
• A panoramic camera (9), positioned at the top section (1) which enables to capture the general road image to submit it to a central database in order to ensure that the information obtained is recorded and controlled;
• A modem (12) mounted into the body section (2) in order to carry out the exchange, distribution and sharing of information between the central database and the smart traffic light
• A server (10) mounted in the body section (2) which provides the storage, and publication of the information and access to said information obtained on a network by means of a modem or a switch (12) and to distribute the information on said network to different users or systems.
• At least two distributors (11) provided on the body section (2) in order to carry out energy distribution;
• A card reader (13) provided on the body section (2) in order to prevent the system from being used by unauthorized people;
• A switch (14) provided at the body section (2) in order to enable the information received and transmitted to be gathered together, and to be submitted to a database centre via telephone lines or network cables in order for said information to be published by means of said modem (12);
• A smart power supply (15) mounted at the body section (2) which provides energy to keep the system running; and enables battery charge level notification; voltage input-output status and voltage level notification, to open and close each output, notification relating to the open-closed status of each output, voltage usage notification, critical level notification of voltage and current, status notification showing that lattice energy is not present, and which provides remote access when output voltage is not present;
   Red traffic light (3) provided in the body section (2) to warn the vehicles by lighting on and off in case of an accident and to indicate that the vehicles need to stop in order to regulate crossroad traffic;
• Yellow traffic light (4) installed into the body section (2) which is used, when lighting on its own in order to regulate crossroad traffic to indicate that the traffic light is about to turn red from green, when lighting together with the red light (3) in order to indicate that the green traffic light (5) is about to light up and
• A green traffic light (5) which is provided in the body section (2) which shows that the road is suitable for the vehicles to pass in order to regulate crossroad traffic.

The operation principle of a smart recording, control and warning system for crossroad traffic subject to the invention is as follows;
• Average speed between at least two points is determined by means of at least one licence plate recognition camera (7) provided in order to continuously read plates automatically and the traffic planning of vehicle routes is planned,
• Violations of traffic rules such as violation of traffic lights, unauthorized right/left turns, and information obtained from the panoramic camera (9), license plate recognition camera (7) and radar or lidar (6) are determined by reading the license plates
• The position, movement direction, speed and travel direction information of vehicles and pedestrians on the roads and crossroads, and the licence plate information of vehicles are continuously and automatically recorded by means of the information obtained from the panoramic camera (9), license plate recognition camera (7), and radar or lidar (6)
• Information obtained from the panoramic camera (9), license plate recognition camera (7) and radar (6) are submitted to the central database via a server (10) modem (12) and are continuously recorded,
• All of the information such as statistical information comprising number of pedestrians and vehicles on the road and crossroads according to time and location, speed, acceleration, average speed etc, are kept under record, monitored and controlled at a single central database,
• The density information of pedestrian and vehicles on the roads and crossroads, obtained from the panoramic camera (9), license plate recognition camera (7) and the radar or lidar (6) are evaluated together with the information obtained from other crossroads and following the evaluation of traffic flow, the waiting time at the traffic lights are reduced and the traffic flow is accelerated.
• In the case of exceeding the speed limits etc, depending on the evaluation of the information regarding speed and travel direction, collected at the central database via mobile devices or similar systems, warning signals are sent to the driver of the vehicle or directly to the vehicle if suitable technical hardware is available in the vehicle,
• The speed information required in order to provide a green wave function, is submitted to the vehicle if the necessary technical hardware is present on the vehicle or the driver of the vehicle; especially vehicles which have right of way, such as ambulances or fire engines depending on the information such as the number of vehicles at the crossroads, speed and travel direction, gathered via mobile devices or similar systems and then collected and evaluated at the central database.
• All of the records that have been previously recorded and gathered at the central database can be examined to determine those that have committed traffic crimes, violations and those that have been involved in accidents.
• All of the previous records that have been gathered at the central database are examined and drivers that have higher risk in being involved in accidents are determined.
• Related notifications are directly submitted to the vehicle if the vehicle is configured with the suitable technical hardware and to the driver of the vehicle depending on information gathered at the central database via mobile devices or other similar systems such as the evaluation of the travel direction and speed information of pedestrians and vehicles on the roads and at the crossroads.

The possible traffic accidents are estimated by means of the evaluation of the travel speed and travel direction of pedestrians and vehicles on the roads and at the crossroads, and in case of a possible accident, the red traffic light (3) lights on and off in order to warn the driver. If the vehicles are supported with said hardware information regarding the risk of accident is submitted to the vehicle and if the accident of the vehicle can be prevented, said accident is prevented, if on the other hand the accident cannot be prevented, the necessary preparations or precautions in order to minimize the effects of the accident can be taken and warning signals can be provided.

## Claims

1. A smart recording, control and warning system for crossroad traffic which operates not only for a single crossroad but in coordination with other crossroads nearby which enables to control the relationship of traffic in each crossroad and to submit the necessary warnings to the related posts/points, consisting of a top section (1) and a body section (2), **characterized in that**; it comprises
• A radar or a lidar (6) positioned in the top section (1) in order to generally determine the speed and type of vehicles on the road and in addition to this, the speed of the pedestrians,
• At least a licence plate recognition camera (7) positioned in the top section (1) which enables to continuously read plates automatically in order to record said information and to submit it to a central database via the system;
• A panoramic camera (9) which enables to capture the general road image in order to submit it to a central database if desired to ensure that the information obtained is recorded and controlled;
• At least a modem or a switch (12) enabling communication in order to carry out the exchange, distribution and sharing of information between the central database and this system,
• At least a server (10) which provides the storage, and publication of the information and access to said information obtained on a network by means of a modem or a switch (12) and to distribute the information on said network to different users or systems.

2. A control and warning system according to claim 1, **characterized in that** it comprises a traffic light control module

3. A control and warning system according to claim 2, **characterized in that** it comprises
• a red traffic light (3) provided in the body section (2) to warn the vehicles by lighting on and off in case of an accident and to indicate that the vehicles need to stop in order to regulate crossroad traffic;
• Yellow traffic light (4) installed into the body section (2) which is used, when lighting on its own in order to regulate crossroad traffic to indicate that the traffic light is about to turn red from green, when lighting together with the red light (3) in order to indicate that the green traffic light (5) is about to light up and
• A green traffic light (5) which is provided in the body section (2) which shows that the road is suitable for the vehicles to pass in order to regulate crossroad traffic.

4. An operation method of a smart recording, control and warning system according to claim 1, **characterized in that**;
• Average speed between at least two points is determined by means of the licence plate recognition camera (7) provided in order to continuously read plates automatically and the traffic planning of vehicle routes is planned,
• Violations of traffic rules such as violation of traffic lights, unauthorized right/left turns, and information obtained from the panoramic camera (9), license plate recognition camera (7) and radar (6) are determined by reading the license plates,
• The position, movement direction, speed and travel direction information of vehicles and pedestrians on the roads and crossroads, and the licence plate information of vehicles are continuously and automatically recorded by means of the information obtained from the panoramic camera (9), license plate recognition camera (7), and radar or lidar (6)
• Information obtained from the panoramic camera (9), license plate recognition camera (7) and radar (6) are submitted to the central database via a server (10) modem (12) and are continuously recorded,
• All of the information such as statistical information comprising number of pedestrians and vehicles on the road and crossroads according to time and location, speed, acceleration, average speed etc, are kept under record, monitored and controlled at a single central database,
• The density information of pedestrian and vehicles on the roads and crossroads, obtained from the panoramic camera (9), license plate recognition camera (7) and the radar or lidar (7) are evaluated together with the information obtained from other crossroads and following the evaluation of traffic flow, the waiting time at the traffic lights are reduced and the traffic flow is accelerated.
• In the case of exceeding the speed limits etc, depending on the evaluation of the information regarding speed and travel direction, collected at the central database via mobile devices or similar systems, warning signals are sent to the driver of the vehicle or directly to the vehicle if suitable technical hardware is available in the vehicle,
• The speed information required in order to provide a green wave function, is submitted to the vehicle if the necessary technical hardware is present on the vehicle or the driver of the vehicle; especially vehicles which have right of way, such as ambulances or fire engines depending on the information such as the number of vehicles at the crossroads, speed and travel direction, gathered via mobile devices or similar systems and then collected and evaluated at the central database.
• All of the records that have been previously recorded and gathered at the central database can be examined to determine those that have committed traffic crimes, violations and those that have been involved in accidents.
• All of the previous records that have been gathered at the central database are examined and drivers that have higher risk in being involved in accidents are determined.
• Related notifications are directly submitted to the vehicle if the vehicle is configured with the suitable technical hardware and to the driver of the vehicle depending on information gathered at the central database via mobile devices or other similar systems such as the evaluation of the travel direction and speed information of pedestrians and vehicles on the roads and at the crossroads.
The possible traffic accidents are estimated by means of the evaluation of the travel speed and travel direction of pedestrians and vehicles on the roads and at the crossroads, and in case of a possible accident, the red traffic light (3) lights on and off in order to warn the driver.
